# FASCICULE DE BREVET EUROPEEN

(11) **EP 3 661 835 B1**
(45) Date de publication et mention de la délivrance du brevet: **25.08.2021**
(21) Numéro de dépôt: 18752546.4
(22) Date de dépôt: 02.07.2018
(51) Int. Cl.: B62D 21/11, B62D 29/00

(54) **PROCÉDÉ DE RÉALISATION D'UN BERCEAU EN ALUMINIUM À EFFORTS RÉPARTIS SUR LES AILES DE PROLONGES ARRIÈRE, POUR UN VÉHICULE**
VERFAHREN ZUR HERSTELLUNG EINER AUFNAHME AUS ALUMINIUM MIT LASTENVERTEILUNG ÜBER DIE FLÜGEL DER RÜCKVERLÄNGERUNGEN FÜR EIN FAHRZEUG
METHOD FOR PRODUCING A CRADLE MADE OF ALUMINUM WITH LOADS SPREAD OVER THE WINGS OF REAR EXTENSIONS, FOR A VEHICLE

(30) Priorité: 04.08.2017 FR 1757517
(43) Date de publication de la demande: 10.06.2020
(73) Titulaire: PSA Automobiles SA, 78300 Poissy (FR)
(72) Inventeur: CADET, Bruno, 25700 VALENTIGNEY (FR); KONDRATOFF, Axel, 25150 DAMBELIN (FR); MEDECIN, Jean Louis, 70400 VYANS LE VAL (FR)
(86) Numéro de dépôt international: PCT/FR2018/051627
(87) Numéro de publication internationale: WO 2019/025679

(56) Documents cités:
- FR-A1- 2 774 057
- FR-A1- 3 006 278
- FR-A1- 3 037 305
- FR-A1- 3 046 590

## Description

L'invention concerne les berceaux en aluminium, fabriqués par extrusion (ou filage), usinage et soudage (ou ferrage), et destinés à équiper certains véhicules, éventuellement de type automobile, et plus précisément la fabrication de tels berceaux.

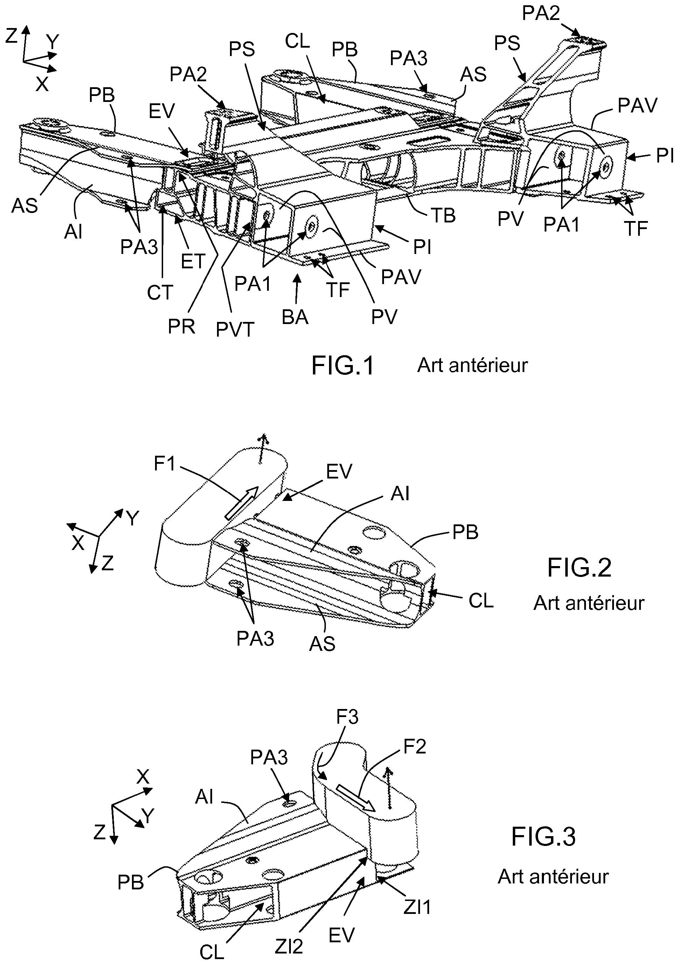

Certains véhicules, généralement de type automobile, comprennent, généralement dans leur partie avant, un berceau en aluminium dont un exemple est illustré sur la figure 1.

Sur cette figure 1, comme sur les autres figures, la direction X est la direction longitudinale du véhicule, laquelle est sensiblement parallèle aux côtés latéraux comportant les portières latérales, la direction Y est la direction transversale du véhicule, laquelle est perpendiculaire à la direction X, et la direction Z est la direction verticale du véhicule, laquelle est perpendiculaire aux directions longitudinale X et transversale Y.

Comme illustré, et comme décrit dans les documents brevet FR 3046590 et FR 3037305, un berceau BA comprend une traverse TB extrudée, usinée, destinée à être installée dans un véhicule suivant la direction transversale Y, et comportant deux extrémités opposées entre elles et à chacune desquelles sont solidarisées fixement une pièce d'ancrage avant (ou « corne ») PAV et une prolonge (ou chape) arrière PB.

La traverse TB comprend deux extrémités transversales ET (opposées entre elles) et une cloison transversale CT extrudée suivant la direction transversale Y.

L'ancrage avant du berceau BA sur la caisse d'un véhicule se fait par l'intermédiaire des deux pièces d'ancrage avant PAV, droite et gauche. Chaque pièce d'ancrage avant PAV est extrudée suivant la direction transversale Y et comprend des parties inférieure PI et supérieure PS se prolongeant mutuellement. Chaque partie inférieure PI est solidarisée fixement à l'une des deux extrémités de la traverse TB via des cordons de soudure et comprend deux parois verticales PV munies de trous définissant un premier point d'ancrage PA1 (généralement appelé E1), suivant la direction longitudinale X, par exemple pour l'ancrage d'une partie avant d'un triangle de roue (ou de suspension) via une vis. Chaque partie supérieure PS comprend des trous définissant un deuxième point d'ancrage vertical PA2 (généralement appelé X2) et destinés à être traversés par une vis couplée à une partie de la caisse.

L'ancrage arrière du berceau BA sur la caisse du véhicule se fait par l'intermédiaire des deux prolonges arrière PB, droite et gauche. Chaque prolonge arrière PB est extrudée suivant la direction longitudinale X et usinée afin de comprendre une cloison longitudinale CL prolongée par des ailes supérieure AS et inférieure AI, sensiblement horizontales et munies de trous qui définissent un troisième point d'ancrage PA3 (généralement appelé E2), suivant la direction verticale Z, par exemple pour l'ancrage d'une partie arrière d'un triangle de roue.

Une fois que la traverse TB, les prolonges arrière PB et les pièces d'ancrage avant PAV ont été extrudées selon leurs directions respectives, on peut pré-usiner les deux extrémités transversales ET de la traverse TB. Par exemple, chaque extrémité transversale ET peut être pré-usinée au moyen d'une scie fraise (par exemple ayant un disque d'un diamètre de 250 mm ou 300 mm) dont l'axe de fraisage est perpendiculaire au plan XZ.

Puis, on met en œuvre un procédé de réalisation comprenant une première étape d'usinage et une seconde étape de soudage.

Dans cette première étape, on usine les deux extrémités transversales ET de la traverse TB et les deux extrémités avant EV respectivement des deux prolonges arrière PB. Plus précisément, et comme illustré sur les figures 2 à 4, chaque extrémité avant EV est usinée au moyen d'un outil ayant un axe d'usinage placé parallèlement à la direction verticale Z. Cet usinage se fait tout d'abord suivant un premier trajet parallèle à la direction transversale Y (flèche F1 de la figure 2), pour définir une première zone d'interface ZI1 dans une partie centrale et une partie supérieure. Puis, cet usinage se fait suivant un second trajet initialement parallèle à la direction transversale Y (flèche F2 de la figure 3), puis incurvé par rapport à cette dernière (flèche F3 de la figure 3), pour définir une deuxième zone d'interface ZI2, prolongeant vers l'arrière la première zone d'interface ZI1, dans une partie inférieure de la cloison longitudinale CL et dans l'aile inférieure AI.

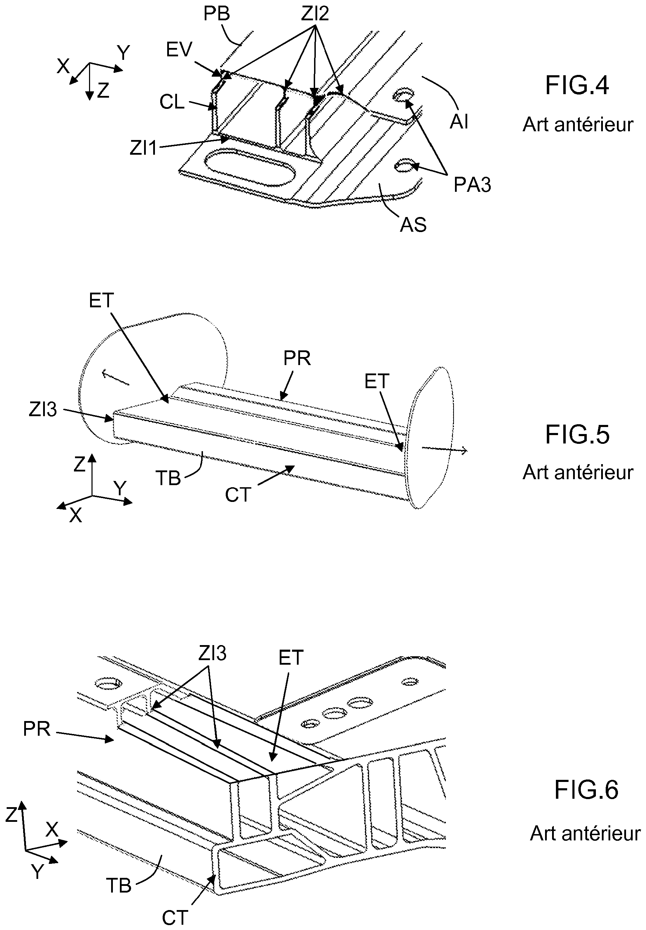

Egalement comme illustré sur les figures 5 et 6, chaque extrémité transversale ET est usinée au moyen d'un outil ayant un axe d'usinage placé parallèlement à la direction verticale Z avec un trajet contenu dans le plan XY puis ayant un axe d'usinage placé parallèlement à la direction transversale Y avec un trajet contenu dans le plan XZ (voir figure 6), pour définir dans une partie supérieure de sa partie arrière une troisième zone d'interface ZI3 adaptée à l'accostage sur la première zone d'interface ZI1.

Dans la seconde étape, on soude des parties arrière PR usinées des extrémités transversales ET de la traverse TB respectivement aux extrémités avant EV des deux prolonges arrière PB. On peut également souder des parties avant PVT usinées des extrémités transversales ET de la traverse TB respectivement aux pièces d'ancrage avant PAV.

Ce procédé de l'art antérieur offre un usinage relativement simple (deux usinages avec l'axe de l'outil selon la direction verticale Z pour chaque prolonge arrière PB, et deux usinages pour chaque extrémité transversale ET de la traverse TB). Cependant, il induit pour certains berceaux un affaiblissement des ailes inférieures de ses prolonges arrière PB, ce qui peut provoquer des fissures sensiblement suivant la direction longitudinale X dans les ailes inférieures AI. Cela résulte du fait que l'usinage réalisé sur les extrémités avant EV des prolonges arrière PB oblige à s'adapter au profil des extrémités transversales ET de la traverse TB, et notamment à réduire les extensions longitudinales des cloisons longitudinales CL et des ailes inférieures AI au niveau de ces extrémités avant EV pour permettre le passage et l'accostage de la cloison transversale CT de la traverse TB. Or, cette réduction de l'extension longitudinale des ailes inférieures AI par rapport à celle des ailes supérieures AS provoque une répartition non équilibrée des efforts entre ces ailes inférieures AI et ces ailes supérieures AS, qui peut induire une fissuration des ailes inférieures AI.

Pour éviter cet affaiblissement, on pourrait décaler la position de la cloison transversale CT de la traverse TB. Mais cette position est imposée par la surface d'appui de l'écrou de fixation de la direction qui est définie dans un trou de la traverse TB situé à proximité d'une extrémité transversale ET et adapté au passage d'une tête de vissage, et donc il n'est pas possible de la décaler.

L'invention a donc notamment pour but d'améliorer la situation.

Elle propose à cet effet un procédé, destiné à permettre la réalisation d'un berceau en aluminium devant équiper un véhicule, et comprenant :
- une première étape dans laquelle on usine deux extrémités transversales opposées entre elles d'une traverse comportant une cloison transversale extrudée suivant une direction transversale et deux extrémités avant respectivement de deux prolonges arrière extrudées suivant une direction longitudinale perpendiculaire à la direction transversale et comprenant chacune une cloison longitudinale prolongée par des ailes supérieure et inférieure munies de trous définissant un point d'ancrage, suivant une direction verticale, et
- une seconde étape dans laquelle on soude des parties arrière usinées des extrémités transversales respectivement aux extrémités avant.

Ce procédé se caractérise par le fait que dans sa première étape on usine :
- chaque extrémité avant en ayant un axe d'usinage parallèle à la direction verticale pour définir une première zone d'interface, puis en ayant un axe d'usinage parallèle à la direction longitudinale dans une partie inférieure pour définir une deuxième zone d'interface prolongeant vers l'arrière la première zone d'interface, et
- chaque extrémité transversale pour définir dans une partie supérieure de sa partie arrière une troisième zone d'interface adaptée à la première zone d'interface, puis en ayant un axe d'usinage parallèle à la direction transversale dans une partie inférieure de sa partie arrière pour définir une quatrième zone d'interface adaptée à la deuxième zone d'interface.

Les ailes inférieures et les cloisons longitudinales étant prolongées vers l'avant suivant la direction longitudinale, l'accostage entre la traverse et les prolonges arrière et donc notablement amélioré, ce qui permet de mieux répartir les efforts entre les ailes inférieures et supérieures au niveau des extrémités avant des prolonges arrière.

Le procédé selon l'invention peut comporter d'autres caractéristiques qui peuvent être prises séparément ou en combinaison, et notamment :
- dans un premier mode de réalisation, dans sa première étape on peut usiner, d'une part, chaque extrémité avant en ayant un axe d'usinage parallèle à la direction verticale et en suivant un premier trajet parallèle à la direction transversale, pour définir la première zone d'interface, puis en ayant un axe d'usinage parallèle à la direction longitudinale et en suivant un deuxième trajet parallèle à la direction transversale dans la partie inférieure pour définir la deuxième zone d'interface, et, d'autre part, chaque extrémité transversale avec un troisième trajet contenu dans un plan perpendiculaire à la direction verticale puis contenu dans un plan perpendiculaire à la direction transversale, dans la partie inférieure de sa partie arrière, pour définir la troisième zone d'interface, puis en ayant un axe d'usinage parallèle à la direction transversale et en suivant un quatrième trajet initialement parallèle à la direction verticale et ensuite incurvé par rapport à la direction verticale dans la partie inférieure de sa partie arrière pour définir la quatrième zone d'interface ;
- dans un second mode de réalisation, dans sa première étape on peut usiner, d'une part, chaque extrémité avant en ayant un axe d'usinage parallèle à la direction verticale et en suivant un premier trajet initialement parallèle à la direction transversale puis incurvé par rapport à la direction transversale et finalement de nouveau parallèle à la direction transversale, pour définir la première zone d'interface, puis en ayant un axe d'usinage parallèle à la direction longitudinale et en suivant un deuxième trajet parallèle à la direction transversale dans la partie inférieure pour définir la deuxième zone d'interface, et, d'autre part, chaque extrémité transversale avec un troisième trajet contenu dans un plan perpendiculaire à la direction verticale puis contenu dans un plan perpendiculaire à la direction transversale, dans la partie inférieure de sa partie arrière, pour définir la troisième zone d'interface, puis en ayant un axe d'usinage parallèle à la direction transversale et en suivant un quatrième trajet initialement parallèle à la direction longitudinale puis parallèle à la direction verticale et ensuite incurvé par rapport à la direction verticale pour définir la quatrième zone d'interface ;
   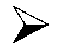 dans sa première étape, après avoir usiné une extrémité transversale en ayant un axe d'usinage parallèle à la direction longitudinale et en suivant un deuxième trajet parallèle à la direction transversale dans la partie inférieure pour définir la deuxième zone d'interface, on peut usiner cette extrémité transversale au niveau d'une face interne de son aile supérieure en ayant un axe d'usinage parallèle à la direction verticale et en suivant un cinquième trajet incurvé par rapport à la direction longitudinale, afin d'aplanir une partie de la deuxième zone d'interface au niveau de cette face interne ;
- dans sa seconde étape on peut souder une pièce rapportée de renfort sur une face externe inférieure de la cloison longitudinale et une face externe de l'aile inférieure de chaque prolonge arrière, au voisinage de son extrémité avant ;
- dans sa seconde étape on peut également souder des parties avant usinées des extrémités transversales respectivement à deux pièces d'ancrage avant extrudées suivant la direction transversale et comprenant deux parois verticales munies de trous définissant un autre point d'ancrage, suivant une direction longitudinale perpendiculaire à la direction transversale.

L'invention propose également un berceau en aluminium, destiné à équiper un véhicule, et réalisé par une mise en œuvre d'un procédé de réalisation du type de celui présenté ci-avant.

L'invention propose également un véhicule, éventuellement de type automobile, et comprenant un berceau en aluminium du type de celui présenté ci-avant.

Par exemple, ce véhicule peut également comprendre deux triangles de roue comprenant chacun une partie avant solidarisée à l'une des pièces d'ancrage avant du berceau, et une partie arrière solidarisée à l'une des prolonges arrière du berceau.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
- la figure 1 illustre schématiquement, dans une vue en perspective, un exemple de réalisation d'un berceau en aluminium de l'art antérieur, avant le couplage de trains de roue,
- la figure 2 illustre schématiquement, dans une vue en perspective, la première phase d'usinage d'une extrémité avant d'une prolonge arrière d'un berceau du type de celui illustré sur la figure 1,
- la figure 3 illustre schématiquement, dans une vue en perspective, la seconde phase d'usinage d'une extrémité avant d'une prolonge arrière d'un berceau du type de celui illustré sur la figure 1,
- la figure 4 illustre schématiquement, dans une vue en perspective, une partie de la prolonge arrière des figures 2 et 3 après l'usinage de son extrémité avant,
- la figure 5 illustre schématiquement, dans une vue en perspective, la phase d'usinage d'une extrémité transversale d'une traverse d'un berceau du type de celui illustré sur la figure 1,
- la figure 6 illustre schématiquement, dans une vue en perspective, une partie de la traverse de la figure 5 après l'usinage de ses extrémités transversales,
- la figure 7 illustre schématiquement, dans une vue en perspective, un premier exemple de première phase d'usinage d'une extrémité avant d'un premier exemple de réalisation d'une prolonge arrière d'un berceau selon l'invention,
- la figure 8 illustre schématiquement, dans une vue en perspective, un premier exemple de seconde phase d'usinage d'une extrémité avant d'un premier exemple de réalisation d'une prolonge arrière d'un berceau selon l'invention,
- la figure 9 illustre schématiquement, dans une vue en perspective, une partie de la prolonge arrière des figures 7 et 8 après l'usinage de son extrémité avant,
- la figure 10 illustre schématiquement, dans une vue en perspective, un premier exemple de seconde phase d'usinage d'une extrémité transversale d'un premier exemple de réalisation d'une traverse d'un berceau selon l'invention,
- la figure 11 illustre schématiquement, dans une vue en perspective, une partie de la traverse de la figure 10 après l'usinage de ses extrémités transversales,
- la figure 12 illustre schématiquement, dans une vue en perspective, un second exemple de première phase d'usinage d'une extrémité avant d'un second exemple de réalisation d'une prolonge arrière d'un berceau selon l'invention,
- la figure 13 illustre schématiquement, dans une vue en perspective, un second exemple de deuxième phase d'usinage d'une extrémité avant d'un second exemple de réalisation d'une prolonge arrière d'un berceau selon l'invention,
- la figure 14 illustre schématiquement, dans une vue en perspective, un second exemple de troisième phase d'usinage d'une extrémité avant d'un second exemple de réalisation d'une prolonge arrière d'un berceau selon l'invention,
- la figure 15 illustre schématiquement, dans une vue en perspective, une partie de la prolonge arrière des figures 12 à 14 après l'usinage de son extrémité avant,
- la figure 16 illustre schématiquement, dans une vue en perspective, un second exemple de seconde phase d'usinage d'une extrémité transversale d'un second exemple de réalisation d'une traverse d'un berceau selon l'invention,
- la figure 17 illustre schématiquement, dans une vue en perspective, une partie de la traverse de la figure 16 après l'usinage de ses extrémités transversales, et
- la figure 18 illustre schématiquement, dans une vue en perspective, une partie d'un berceau selon l'invention équipé de pièces rapportées de renfort.

L'invention a notamment pour but de proposer un procédé destiné à permettre la réalisation d'un berceau en aluminium BA à efforts répartis sur les ailes AS et AI des prolonges arrière PB et devant équiper un véhicule.

Dans ce qui suit, on considère, à titre d'exemple non limitatif, que le véhicule est de type automobile. Il s'agit, par exemple, d'une voiture. Mais l'invention n'est pas limitée à ce type de véhicule. Elle concerne en effet tout type de véhicule comprenant un berceau en aluminium destiné à faire partie d'un ensemble de train avant et éventuellement à participer au support de triangles de roue et d'éventuels autres équipements, comme par exemple la direction, la barre anti-devers, des montages de roue par la fixation triangle et biellette de barre anti-devers, des éléments de support d'échappement, ou le carter d'insonorisation.

Il est important de noter que ce qui différencie un berceau BA selon l'invention du berceau de l'art antérieur illustré sur la figure 1, ce sont essentiellement les extrémités avant EV respectives de ses deux prolonges arrière (droite et gauche) PB et les deux extrémités transversales ET, opposées entre elles, de sa traverse TB. Ces différences importantes résultent de la mise en oeuvre d'un procédé de réalisation selon l'invention, différent de celui de l'art antérieur partiellement illustré sur les figures 2 à 6.

Par conséquent, une fois réalisé, un berceau (en aluminium) BA, selon l'invention, comprend au moins une traverse TB et deux prolonges arrière (droite et gauche) PB, ainsi qu'éventuellement deux pièces d'ancrage avant ou cornes (droite et gauche) PAV.

Le procédé selon l'invention comprend une première étape d'usinage suivie d'une seconde étape de soudage, décrites plus loin.

La traverse TB, selon l'invention, comprend deux extrémités transversales ET (opposées entre elles) et une cloison transversale CT extrudée suivant la direction transversale Y. Elle est usinée et destinée à être installée dans un véhicule suivant la direction transversale Y. Cette traverse TB comprend deux extrémités opposées entre elles et à chacune desquelles sont solidarisées fixement une prolonge (ou chape) arrière PB et éventuellement une pièce d'ancrage avant (ou corne) PAV.

L'ancrage arrière du berceau BA sur la caisse du véhicule se fait par l'intermédiaire des deux prolonges arrière PB, droite et gauche. Chaque prolonge arrière PB est extrudée suivant la direction longitudinale X et usinée afin de comprendre une cloison longitudinale CL prolongée par des ailes supérieure AS et inférieure AI, sensiblement horizontales et munies de trous qui définissent un troisième point d'ancrage PA3 (généralement appelé E2), suivant la direction verticale Z, par exemple pour l'ancrage d'une partie arrière d'un triangle de roue, via une vis ou un boulon.

Dans ce qui suit et ce qui précède les notions « d'avant » et « d'arrière » sont relatives à l'extrémité avant du véhicule. Par conséquent, un élément avant est orienté vers l'extrémité avant du véhicule, tandis qu'un élément arrière est orienté vers l'extrémité arrière du véhicule.

L'ancrage avant du berceau BA sur la caisse d'un véhicule peut se faire par l'intermédiaire des deux pièces d'ancrage avant PAV, droite et gauche. Chaque pièce d'ancrage avant PAV est extrudée suivant la direction transversale Y et comprend une partie inférieure PI et une partie supérieure PS qui se prolongent mutuellement.

Chaque partie inférieure PI est solidarisée fixement à l'une des deux extrémités de la traverse TB via des cordons de soudure et comprend deux parois verticales PV sensiblement parallèles entre elles et munies de trous qui définissent un premier point d'ancrage PA1 (ou point E1), suivant la direction longitudinale X, pour l'ancrage d'une partie avant d'un triangle de roue (ou de suspension), via une vis ou un boulon. Par ailleurs, chaque partie inférieure PI peut comprendre des trous TF destinés à permettre la solidarisation fixe par vissage de prolonges servant à absorber au moins partiellement les chocs subis sur la face avant du véhicule.

Chaque partie supérieure PS comprend des trous qui définissent un deuxième point d'ancrage vertical PA2 (ou point X2) et destinés à être traversés par une vis ou un boulon couplé(e) à une partie de la caisse du véhicule.

Une fois que la traverse TB, les prolonges arrière PB et les pièces d'ancrage avant PAV ont été extrudées selon leurs directions respectives, on met en œuvre un procédé de réalisation selon l'invention, lequel comprend une première étape d'usinage et une seconde étape de soudage.

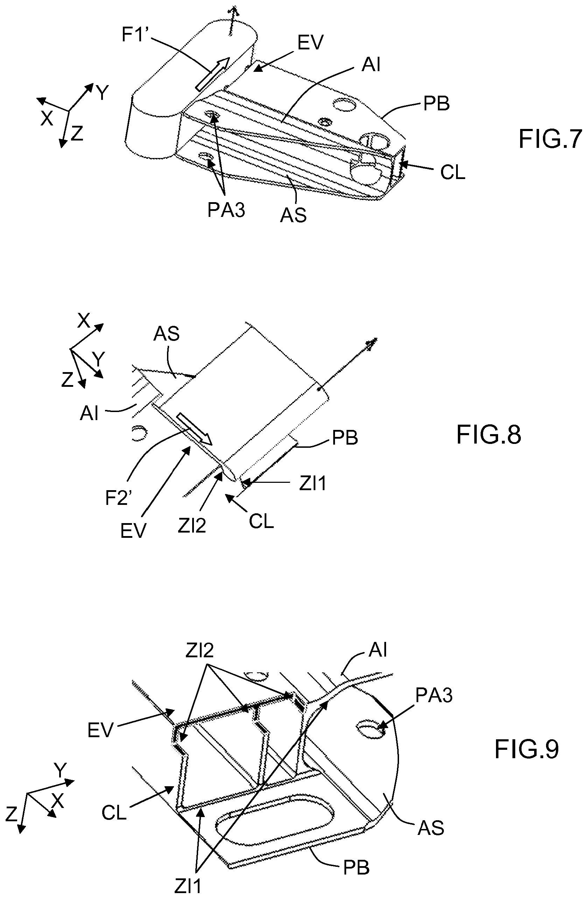

Dans la première étape, on usine les deux extrémités transversales ET de la traverse TB et les deux extrémités avant EV respectivement des deux prolonges arrière PB. Plus précisément, et comme illustré non limitativement sur les figures 7 à 9 et 12 à 15, on usine chaque extrémité avant EV d'une prolonge arrière PB en ayant un axe d'usinage qui est parallèle à la direction verticale Z pour définir une première zone d'interface ZI1, puis en ayant un axe d'usinage parallèle à la direction longitudinale X dans une partie inférieure pour définir une deuxième zone d'interface ZI2 qui prolonge vers l'arrière la première zone d'interface ZI1.

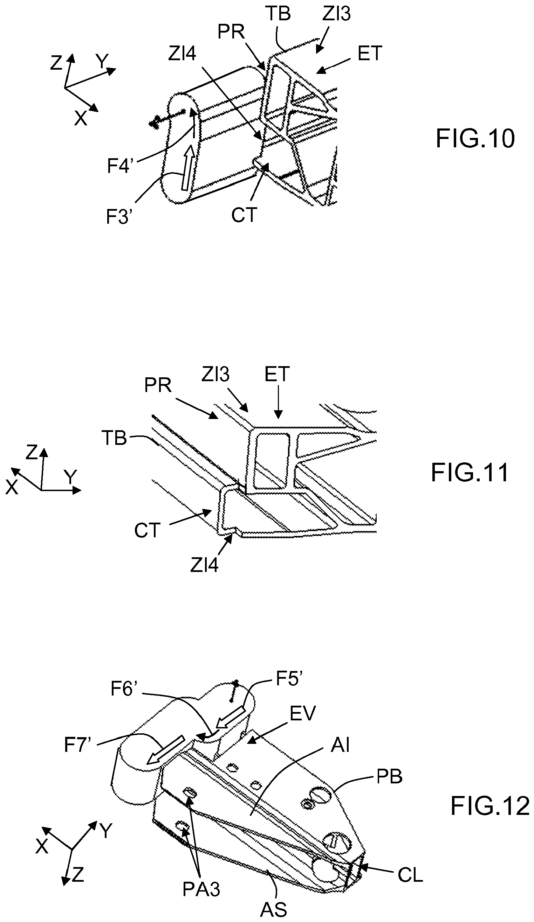

Par ailleurs, et comme illustré non limitativement sur les figures 10 et 11 et 16 et 17, on commence par usiner chaque extrémité transversale ET de la traverse TB pour définir dans une partie supérieure de sa partie arrière PR une troisième zone d'interface ZI3 adaptée à la première zone d'interface ZI1, pour l'accostage en vue du soudage. Pour ce faire, on réalise un usinage similaire à celui décrit précédemment en référence aux figures 5 et 6, c'est-à-dire au moyen d'un outil ayant un axe d'usinage placé parallèlement à la direction verticale Z avec un trajet contenu dans le plan XY, puis ayant un axe d'usinage placé parallèlement à la direction transversale Y avec un trajet contenu dans le plan XZ.

Puis, on usine chaque extrémité transversale ET de la traverse TB en ayant un axe d'usinage parallèle à la direction transversale Y dans une partie inférieure de sa partie arrière PR pour définir une quatrième zone d'interface ZI4 adaptée à la deuxième zone d'interface ZI2, pour l'accostage en vue du soudage.

Dans la seconde étape du procédé selon l'invention, on soude des parties arrière PR usinées des extrémités transversales ET de la traverse TB respectivement aux extrémités avant EV des deux prolonges arrière PB. On peut également souder des parties avant PVT usinées des extrémités transversales ET de la traverse TB respectivement aux pièces d'ancrage avant PAV.

Grâce à l'invention, les ailes inférieures AI et les cloisons longitudinales CL sont prolongées vers l'avant suivant la direction longitudinale X, par rapport à ce qui se fait dans l'art antérieur, ce qui permet d'améliorer notablement l'accostage entre la traverse TB et les prolonges arrière PB afin que les efforts soient mieux répartis entre les ailes inférieures AI et supérieures AS au niveau des extrémités avant EV des prolonges arrière PB.

La première étape du procédé selon l'invention peut être réalisée d'au moins deux façons décrites ci-après.

Dans un premier mode de réalisation de la première étape, illustré sur les figures 7 à 11, on peut usiner chaque extrémité avant EV en deux phases et chaque extrémité transversale ET en deux phases.

Dans une première phase on peut commencer par usiner chaque extrémité avant EV en ayant un axe d'usinage parallèle à la direction verticale Z et en suivant un troisième trajet parallèle à la direction transversale Y (flèche F1' de la figure 7), pour définir la première zone d'interface ZI1. Puis, dans une seconde phase on peut ensuite usiner chaque extrémité avant EV en ayant un axe d'usinage parallèle à la direction longitudinale X et en suivant un deuxième trajet parallèle à la direction transversale Y dans la partie inférieure (flèche F2' de la figure 8) pour définir la deuxième zone d'interface ZI2. Le résultat de ces deux phases d'usinage d'une extrémité avant EV est illustré sur la figure 9.

Dans une autre première phase on peut commencer par usiner chaque extrémité transversale ET dans la partie inférieure de sa partie arrière PR, avec un troisième trajet contenu dans un plan XY perpendiculaire à la direction verticale Z puis contenu dans un plan XZ perpendiculaire à la direction transversale Y, pour définir la troisième zone d'interface ZI3. Puis, dans une autre seconde phase on peut ensuite usiner chaque extrémité transversale ET dans la partie inférieure de sa partie arrière PR, en ayant un axe d'usinage parallèle à la direction transversale Y et en suivant un quatrième trajet, initialement parallèle à la direction verticale Z (flèche F3' de la figure 10) et ensuite incurvé par rapport à la direction verticale Z (flèche F4' de la figure 10) pour retirer l'outil, pour définir la quatrième zone d'interface ZI4. Le résultat de ces deux phases d'usinage d'une extrémité transversale ET est illustré sur la figure 11.

Dans ce premier mode de réalisation, on réalise la première phase d'usinage de chaque extrémité avant EV avec l'axe de l'outil parallèle à la direction verticale Z, comme dans l'art antérieur, mais contrairement à ce dernier on réalise la seconde phase d'usinage avec l'axe de l'outil parallèle à la direction longitudinale X, ce qui permet avantageusement de s'affranchir du rayon de fraise de l'outil. En outre, cela permet avantageusement d'avancer vers l'avant la cloison longitudinale CL de chaque prolonge arrière PB (dans sa partie inférieure), afin de mieux répartir les efforts entre les ailes supérieure AS et inférieure AI.

Par ailleurs, dans ce premier mode de réalisation, on réalise l'usinage de chaque extrémité transversale ET en deux phases, contrairement à l'art antérieur qui n'en nécessite qu'une seule. La seconde phase additionnelle est réalisée sur la cloison transversale CT au niveau des deux extrémités transversales ET, afin de permettre le passage de chaque cloison longitudinale CL de chaque prolonge arrière PB (au niveau de son extrémité avant EV) du fait qu'elle (CL) est désormais plus avancée que dans l'art antérieur.

Dans un second mode de réalisation de la première étape, illustré sur les figures 12 à 17, on peut usiner chaque extrémité avant EV en au moins deux phases et chaque extrémité transversale ET en deux phases.

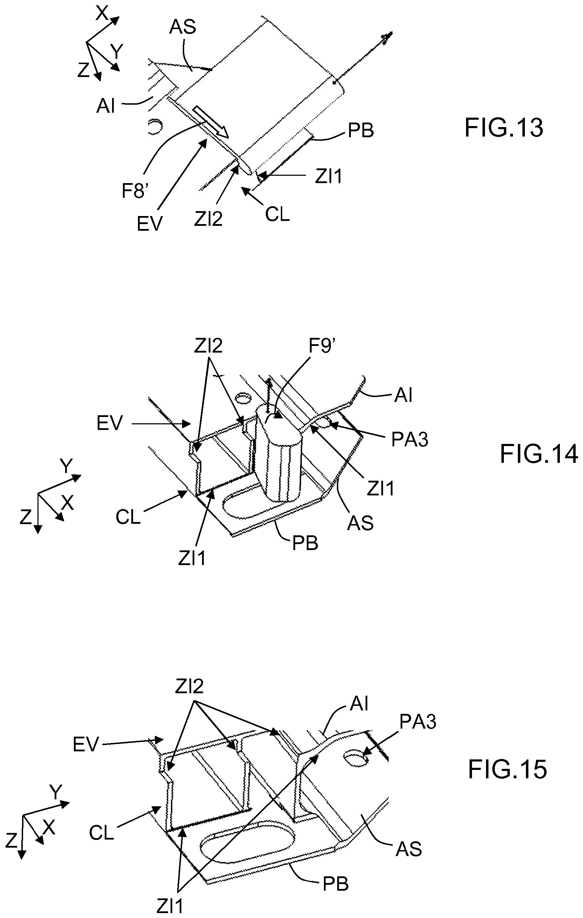

Dans une première phase on peut commencer par usiner chaque extrémité avant EV en ayant un axe d'usinage parallèle à la direction verticale Z et en suivant un premier trajet initialement parallèle à la direction transversale Y (flèche F5' de la figure 12), puis incurvé par rapport à la direction transversale Y (flèche F6' de la figure 12), et finalement de nouveau parallèle à la direction transversale Y (flèche F7' de la figure 12), pour définir la première zone d'interface ZI1. Puis, dans une deuxième phase on peut usiner chaque extrémité avant EV en ayant un axe d'usinage parallèle à la direction longitudinale X et en suivant un deuxième trajet parallèle à la direction transversale Y (flèche F8' de la figure 13) dans la partie inférieure, pour définir la deuxième zone d'interface ZI2.

Comme illustré non limitativement sur la figure 14, après la deuxième phase on peut également réaliser une troisième phase dans laquelle on usine chaque extrémité avant EV au niveau d'une face interne de son aile supérieure AS en ayant un axe d'usinage parallèle à la direction verticale Z et en suivant un cinquième trajet incurvé par rapport à la direction longitudinale X (flèche F9' de la figure 14), afin d'aplanir une partie de la deuxième zone d'interface ZI2 au niveau de cette face interne.

Le résultat de ces trois phases d'usinage d'une extrémité avant EV est illustré sur la figure 15.

Dans une autre première phase on peut commencer par usiner chaque extrémité transversale ET pour définir dans une partie supérieure de sa partie arrière PR une troisième zone d'interface ZI3 adaptée à la première zone d'interface ZI1, pour l'accostage en vue du soudage. Pour ce faire, on réalise un usinage similaire à celui décrit précédemment en référence aux figures 5 et 6, c'est-à-dire au moyen d'un outil ayant un axe d'usinage placé parallèlement à la direction verticale Z avec un trajet contenu dans le plan XY, puis ayant un axe d'usinage placé parallèlement à la direction transversale Y avec un trajet contenu dans le plan XZ.

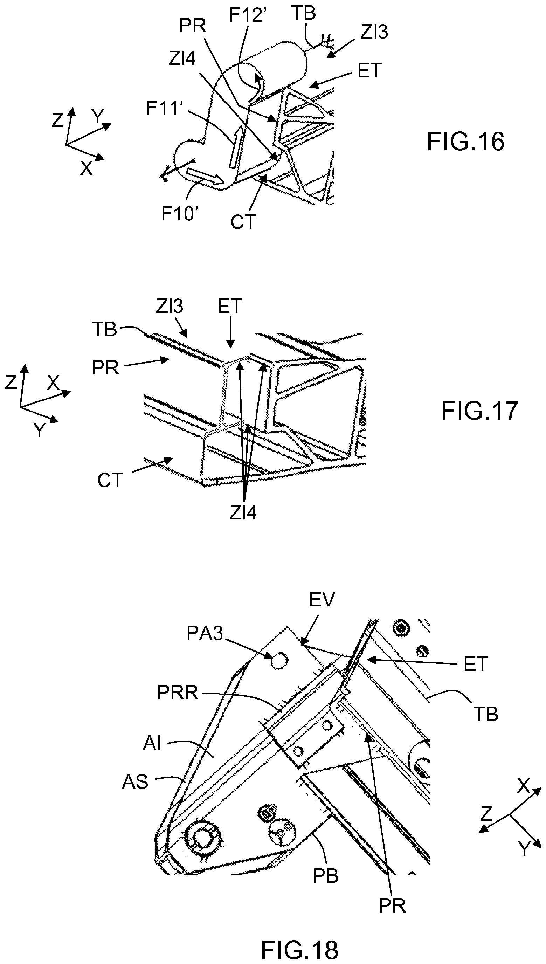

Puis, dans une autre seconde phase on peut ensuite usiner chaque extrémité transversale ET en ayant un axe d'usinage parallèle à la direction transversale Y et en suivant un quatrième trajet initialement parallèle à la direction longitudinale X (flèche F10' de la figure 16), puis parallèle à la direction verticale Z (flèche F11' de la figure 16), et ensuite incurvé par rapport à la direction verticale (flèche F12' de la figure 16), pour définir la quatrième zone d'interface ZI4. Le résultat de ces deux phases d'usinage d'une extrémité transversale ET est illustré sur la figure 17.

Dans ce second mode de réalisation, on réalise toujours la première phase d'usinage de chaque extrémité avant EV avec l'axe de l'outil parallèle à la direction verticale Z, mais avec une trajectoire différente afin de pouvoir avancer encore plus vers l'avant chaque cloison longitudinale CL de chaque prolonge arrière PB (dans sa partie inférieure). Puis, on réalise la deuxième phase d'usinage avec l'axe de l'outil parallèle à la direction longitudinale X, ce qui permet avantageusement de s'affranchir du rayon de fraise de l'outil. En outre on peut adjoindre une troisième phase pour reprendre le rayon d'usinage résultant de la première phase. En l'absence de cette troisième phase, pour surfacer la face interne lors de la première phase, on est contraint d'utiliser un plus faible rayon de fraise de l'outil et de réaliser plusieurs passes, ce qui s'avère plus onéreux et plus chronophage.

On notera, comme illustré non limitativement sur la figure 18, que dans la seconde étape on peut, lorsque cela s'avère nécessaire, souder une pièce rapportée de renfort PRR sur une face externe inférieure de la cloison longitudinale CL et une face externe de l'aile inférieure AI de chaque prolonge arrière PB, au voisinage de son extrémité avant EV. Cela permet d'améliorer encore plus la tenue des prolonges arrière PB aux efforts.

## Revendications

1. Procédé de réalisation d'un berceau en aluminium (BA) destiné à équiper un véhicule, ledit procédé comprenant i) une première étape dans laquelle on usine deux extrémités transversales (ET) opposées entre elles d'une traverse (TB) comportant une cloison transversale (CT) extrudée suivant une direction transversale et deux extrémités avant (EV) respectivement de deux prolonges arrière (PB) extrudées suivant une direction longitudinale perpendiculaire à ladite direction transversale et comprenant chacune une cloison longitudinale (CL) prolongée par des ailes supérieure (AS) et inférieure (AI) munies de trous définissant un point d'ancrage (PA3), suivant une direction verticale, et ii) une seconde étape dans laquelle on soude des parties arrière (PR) usinées desdites extrémités transversales (ET) respectivement auxdites extrémités avant (EV), **caractérisé en ce que** dans ladite première étape on usine a) chaque extrémité avant (EV) en ayant un axe d'usinage parallèle à ladite direction verticale pour définir une première zone d'interface (ZI1), puis en ayant un axe d'usinage parallèle à ladite direction longitudinale dans une partie inférieure pour définir une deuxième zone d'interface (ZI2) prolongeant vers l'arrière ladite première zone d'interface (ZI1), et b) chaque extrémité transversale (ET) pour définir dans une partie supérieure de sa partie arrière (PR) une troisième zone d'interface (ZI3) adaptée à ladite première zone d'interface (ZI1) puis en ayant un axe d'usinage parallèle à ladite direction transversale dans une partie inférieure de sa partie arrière (PR) pour définir une quatrième zone d'interface (ZI4) adaptée à ladite deuxième zone d'interface (ZI2).

2. Procédé selon la revendication 1, **caractérisé en ce que** dans ladite première étape on usine a) chaque extrémité avant (EV) en ayant un axe d'usinage parallèle à ladite direction verticale et en suivant un premier trajet parallèle à ladite direction transversale, pour définir ladite première zone d'interface (ZI1), puis en ayant un axe d'usinage parallèle à ladite direction longitudinale et en suivant un deuxième trajet parallèle à ladite direction transversale dans ladite partie inférieure pour définir ladite deuxième zone d'interface (ZI2), et b) chaque extrémité transversale (ET) avec un troisième trajet contenu dans un plan perpendiculaire à ladite direction verticale puis contenu dans un plan perpendiculaire à ladite direction transversale, dans ladite partie inférieure de sa partie arrière (PR), pour définir ladite troisième zone d'interface (ZI3), puis en ayant un axe d'usinage parallèle à ladite direction transversale et en suivant un quatrième trajet initialement parallèle à ladite direction verticale et ensuite incurvé par rapport à ladite direction verticale dans ladite partie inférieure de sa partie arrière (PR) pour définir ladite quatrième zone d'interface (ZI4).

3. Procédé selon la revendication 1, **caractérisé en ce que** dans ladite première étape on usine a) chaque extrémité avant (EV) en ayant un axe d'usinage parallèle à ladite direction verticale et en suivant un premier trajet initialement parallèle à ladite direction transversale puis incurvé par rapport à ladite direction transversale et finalement de nouveau parallèle à ladite direction transversale, pour définir ladite première zone d'interface (ZI1), puis en ayant un axe d'usinage parallèle à ladite direction longitudinale et en suivant un deuxième trajet parallèle à ladite direction transversale dans ladite partie inférieure pour définir ladite deuxième zone d'interface (ZI2), et b) chaque extrémité transversale (ET) avec un troisième trajet contenu dans un plan perpendiculaire à ladite direction verticale puis contenu dans un plan perpendiculaire à ladite direction transversale, dans ladite partie inférieure de sa partie arrière (PR), puis en ayant un axe d'usinage parallèle à ladite direction transversale et en suivant un quatrième trajet initialement parallèle à ladite direction longitudinale puis parallèle à ladite direction verticale et ensuite incurvé par rapport à ladite direction verticale pour définir ladite quatrième zone d'interface (ZI4).

4. Procédé selon la revendication 3, **caractérisé en ce que** dans ladite première étape, après avoir usiné une extrémité transversale (ET) en ayant un axe d'usinage parallèle à ladite direction longitudinale et en suivant un deuxième trajet parallèle à ladite direction transversale dans ladite partie inférieure pour définir ladite deuxième zone d'interface (ZI2), on usine cette extrémité transversale (ET) au niveau d'une face interne de son aile supérieure (AS) en ayant un axe d'usinage parallèle à ladite direction verticale et en suivant un cinquième trajet incurvé par rapport à ladite direction longitudinale, afin d'aplanir une partie de ladite deuxième zone d'interface (ZI2) au niveau de cette face interne.

5. Procédé selon l'une des revendications 1 à 4, **caractérisé en ce que** dans ladite seconde étape on soude une pièce rapportée de renfort (PRR) sur une face externe inférieure de ladite cloison longitudinale (CL) et une face externe de ladite aile inférieure (AI) de chaque prolonge arrière (PB), au voisinage de son extrémité avant (EV).

6. Procédé selon l'une des revendications 1 à 5, **caractérisé en ce que** dans ladite seconde étape on soude également des parties avant (PVT) usinées desdites extrémités transversales (ET) respectivement à deux pièces d'ancrage avant (PAV) extrudées suivant ladite direction transversale et comprenant deux parois verticales (PV) munies de trous définissant un autre point d'ancrage (PA1), suivant une direction longitudinale perpendiculaire à ladite direction transversale.

7. Berceau en aluminium (BA), destiné à équiper un véhicule, **caractérisé en ce qu'**il est réalisé par une mise en œuvre du procédé de réalisation selon l'une des revendications précédentes.

8. Véhicule, **caractérisé en ce qu'**il comprend un berceau en aluminium (BA) selon la revendication 7.

9. Véhicule selon la revendication 8, **caractérisé en ce qu'**il comprend deux triangles de roue comprenant chacun une partie avant solidarisée à l'une desdites pièces d'ancrage avant (PAV) dudit berceau en aluminium (BA), et une partie arrière solidarisée à l'une desdites prolonges arrière (PB) dudit berceau en aluminium (BA).

10. Véhicule selon la revendication 8 ou 9, **caractérisé en ce qu'**il est de type automobile.

## Patentansprüche

1. Verfahren zur Herstellung eines Aluminiumgestells (BA), das an einem Fahrzeug angebracht werden soll, wobei das Verfahren umfasst i) einen ersten Schritt, bei dem zwei einander gegenüberliegende Querenden (ET) aus einem Querträger (TB) mit einem Trennkreuz (CT) extrudiert in Querrichtung und beide Enden vor (EV) von zwei hinteren Verlängerungen bzw (PB) extrudierten in einer Längsrichtung senkrecht zu der Querrichtung und umfassend jede Trennwand eine Längs (L), verlängert durch obere Flansche (AS) und untere (AI), die mit Löchern versehen sind, die einen Ankerpunkt (PA 3) definieren, in einer vertikalen Richtung, und ii) einen zweiten Schritt, in dem sie die hinteren Teile (PR) bearbeitet von den Querenden (ET) bzw zu den Vorderenden (EV), **dadurch gekennzeichnet, dass** in dem ersten Schritt bearbeitet wird a) jedes Vorderende (EV) mit einer Bearbeitungsachse parallel zu wobei die vertikale Richtung eine erste Grenzfläche (ZI1) definiert, dann eine Bearbeitungsachse parallel zu der Längsrichtung in einem unteren Teil aufweist, um eine zweite Grenzzone (ZI2) zu definieren, die sich nach hinten erstreckt, die erste Grenzzone (ZI1), und b) jedes Querende (ET) zu definieren, die in einem oberen Teil ihres hinteren Teils (VR) eine dritte Schnittstellenzone (ZI3) angepasst dann an den ersten Schnittstellenbereich (ZI1) eine Bearbeitungsachse aufweist, die parallel zum genannten Querrichtung in einem unteren Teil von sein hinterer Teil (PR) um eine vierte Schnittstellenzone (ZI4) zu definieren, die an die zweite Schnittstellenzone (ZI2) angepasst ist.

2. Verfahren nach Anspruch 1, **dadurch gekennzeichnet, dass** in dem ersten Schritt a) jedes vordere Ende (EV) mit einer Bearbeitungsachse parallel zur vertikalen Richtung und einem ersten Pfad parallel zur Querrichtung bearbeitet wird, um die erste Grenzfläche zu definieren (ZI1), die dann eine Bearbeitungsachse parallel zur Längsrichtung hat und einer zweiten Bahn parallel zur Querrichtung in dem unteren Teil folgt, um die zweite Grenzfläche (ZI2) zu definieren, und b) jedes Querende (ET) mit einem dritten Pfad enthalten ist in einer Ebene senkrecht zu dem vertikalen Richtung und dann in einer Ebene senkrecht enthaltenen Querrichtung zu dem, das in dem unteren Teil seines hinteren Teils (PR), zu definieren, wobei die dritten Schnittstellenzone (ZI3), dann einen Bearbeitungsachse parallelen zu der Querrichtung und folgt einem vierten Pfad, der anfänglich parallel ist in der vertikalen Richtung und dann in Bezug auf die vertikale Richtung in dem unteren Teil seines hinteren Teils (PR) gekrümmt, um die vierte Grenzflächenzone (ZI4) zu definieren.

3. Verfahren nach Anspruch 1, **dadurch gekennzeichnet, dass** in dem ersten Schritt a) jedes vordere Ende (EV) bearbeitet wird, indem eine Bearbeitungsachse parallel zu der vertikalen Richtung und durch Verfolgen einer ersten Bahn, die anfänglich parallel zur Querrichtung ist und dann in Bezug auf gekrümmt ist, bearbeitet wird in die Querrichtung und schließlich wieder parallel zur Querrichtung, um die erste Grenzfläche (ZI1) zu definieren, die dann eine Bearbeitungsachse parallel zur Längsrichtung hat und einer zweiten Bahn parallel zur Querrichtung in dem unteren Teil folgt, um die zweite Grenzfläche (ZI2), und b) jedes Querende (ET) mit einer dritten Bahn, die in einer Ebene senkrecht zu der vertikalen Richtung und dann in einer Ebene senkrecht zur Querrichtung enthalten ist, in dem unteren Teil seines hinteren Teils (PR), dann mit einer Bearbeitungsachse parallel zu besagtem Querrichtung und folgt einem vierten Weg, der anfänglich parallel zu der Längsrichtung, dann parallel zu der vertikalen Richtung ist und dann in Bezug auf die vertikale Richtung gekrümmt ist, um die vierte Grenzfläche (ZI4) zu definieren.

4. Verfahren nach Anspruch 3, **dadurch gekennzeichnet, dass** in dem ersten Schritt nach der Bearbeitung eines Querendes (ET) mit einer Bearbeitungsachse parallel zur Längsrichtung und nach einem zweiten Pfad parallel zur Querrichtung in dem Teilboden zum Definieren des zweiter Schnittstellenbereich (ZI2), wir bearbeiten dieses Querende (ET) an einer Innenfläche des oberen Flügels (AS), um eine Bearbeitungsachse parallel zu dem vertikalen Richtung aufweist, und einen fünften Weg in Bezug gekrümmt folgende Längsrichtung zu dem, um einen Teil der zweiten Grenzfläche (ZI2) auf der Höhe dieser Innenfläche abzuflachen.

5. Verfahren nach einem der Ansprüche 1 bis 4, **dadurch gekennzeichnet, dass** in dem zweiten Schritt, einen Einsatz Verstärkung (PRR) an einer Außenseite Schweiß Unterseite der genannten Längswand (CL) und eine Außenfläche des unteren Flügels (AI) von jedem Heckausschub (PB), in der Nähe seines vorderen Endes (EV).

6. Verfahren nach einem der Ansprüche 1 bis 5, **dadurch gekennzeichnet, dass** im zweiten Schritt auch bearbeitete Vorderteile (PVT) der Querenden (ET) bzw an zwei in besagter Richtung extrudierte vordere Verankerungsteile (PAV) angeschweißt werden mit zwei vertikalen Wänden (PV), die mit Löchern versehen sind, die einen weiteren Verankerungspunkt (PA1) in einer Längsrichtung senkrecht zu der Querrichtung definieren.

7. Aluminiumgestell (BA) zur Ausstattung eines Fahrzeugs,
**dadurch gekennzeichnet, dass** es durch ein Herstellungsverfahren nach einem der vorhergehenden Ansprüche hergestellt wird.

8. Fahrzeug, **dadurch gekennzeichnet, dass** es ein Aluminiumgestell (BA) nach Anspruch 7 umfasst.

9. Fahrzeug nach Anspruch 8, **dadurch gekennzeichnet, dass** es zwei Raddreiecke umfasst, von denen jedes einen vorderen Teil umfasst, der an einem der vorderen Verankerungsteile (PAV) des Aluminiumgestells (BA) befestigt ist, und einen hinteren Teil, der an einer der hinteren Verlängerungen befestigt ist (PB) des Aluminiumgestells (BA).

10. Fahrzeug nach Anspruch 8 oder 9, **dadurch gekennzeichnet, dass** es vom Automobiltyp ist.

## Claims

1. Method for producing an aluminum cradle (BA) intended to be fitted to a vehicle, said method comprising i) a first step in which two transverse ends (ET) opposite one another are machined from a cross member (TB) comprising a transverse partition (CT) extruded a transverse direction and both ends before (EV) of two rear prolong respectively (PB) extruded in a longitudinal direction perpendicular to said transverse direction and comprising each partition a longitudinal (L) extended by upper flanges (AS) and lower (AI) provided with holes defining an anchor point (PA3), in a direction vertical, and ii) a second step in which it welds rear portions (PR) machined of said transverse ends (ET) respectively to said front ends (EV), **characterized in that** e in said first step is machined a) each front end (EV) having a machining axis parallel to said vertical direction to define a first interface zone (ZI1), then having a machining axis parallel to said longitudinal direction in a lower part to define a second interface zone (ZI2) extending rearwardly said first interface zone (ZI1), and b) each transverse end (ET) to define in an upper part of its rear part (PR) a third interface zone (ZI3) adapted to said first interface zone (ZI1) then having a machining axis parallel to said transverse direction in a lower part of its rear part (PR) to define a fourth interface zone (ZI4) adapted to said second interface zone (ZI2).

2. Method according to claim 1, **characterized in that** in said first step a) each front end (EV) is machined having a machining axis parallel to said vertical direction and following a first path parallel to said transverse direction, to define said first interface zone (ZI1), then having a machining axis parallel to said longitudinal direction and following a second path parallel to said transverse direction in said lower part to define said second interface zone (ZI2), and b) each transverse end (ET) with a third path contained in a plane perpendicular to said vertical direction and then contained in a plane perpendicular to said transverse direction, in said lower part of its rear part (PR), to define said third interface zone (ZI3), then having a machining axis parallel to said transverse direction and following a fourth path initially parallel in said vertical direction and then curved with respect to said vertical direction in said lower part of its rear part (PR) to define said fourth interface zone (ZI4).

3. Method according to claim 1, **characterized in that** in said first step a) each front end (EV) is machined by having a machining axis parallel to said vertical direction and by following a first path initially parallel to said transverse direction and then curved with respect to said transverse direction and finally again parallel to said transverse direction, to define said first interface zone (ZI1), then having a machining axis parallel to said longitudinal direction and following a second path parallel to said transverse direction in said lower part to define said second interface zone (ZI2), and b) each transverse end (ET) with a third path contained in a plane perpendicular to said vertical direction and then contained in a plane perpendicular to said transverse direction, in said lower part of its rear part (PR), then having a machining axis parallel to said transverse direction and following a fourth path initially parallel to said longitudinal direction then parallel to said vertical direction and then curved with respect to said vertical direction to define said fourth interface zone (ZI4).

4. Method according to claim 3, **characterized in that** in said first step, after having machined a transverse end (ET) having a machining axis parallel to said longitudinal direction and following a second path parallel to said transverse direction in said part bottom to define said second interface zone (ZI2) is machined this transverse end (ET) at an inner face of the upper wing (AS) having a machining axis parallel to said vertical direction and following a fifth path curved with respect to said longitudinal direction, in order to flatten part of said second interface zone (ZI2) at the level of this internal face.

5. Method according to one of claims 1 to 4, **characterized in that** in said second step welding an insert reinforcement (PRR) on an outer side bottom of said longitudinal partition (CL) and an outer face of said lower wing (AI) of each rear extension (PB), in the vicinity of its front end (EV).

6. Method according to one of claims 1 to 5, **characterized in that** in said second step, machined front parts (PVT) of said transverse ends (ET) respectively to two front anchoring parts (PAV) extruded in said direction are also welded transverse and comprising two vertical walls (PV) provided with holes defining another anchor point (PA1), in a longitudinal direction perpendicular to said transverse direction.

7. Aluminum cradle (BA), intended to equip a vehicle, **characterized in that** it is produced by a implementing the production method according to one of the preceding claims.

8. Vehicle **characterized in that** it comprises a cradle to aluminum (BA) according to claim 7.

9. Vehicle according to claim 8, **characterized in that** it comprises two wheel triangles each comprising a front part secured to one of said front anchoring parts (PAV) of said aluminum cradle (BA), and a rear part secured to one of said rear extensions (PB) of said aluminum cradle (BA).

10. Vehicle according to claim 8 or 9, **characterized in that** it is of the automobile type.
